# EUROPÄISCHE PATENTSCHRIFT

(11) **EP 1 281 986 B1**
(45) Veröffentlichungstag und Bekanntmachung des Hinweises auf die Patenterteilung: **27.12.2006**
(21) Anmeldenummer: 02016668.2
(22) Anmeldetag: 25.07.2002
(51) Int. Cl.: G01V 8/20, F16P 3/14

(54) **Verfahren zur Steuerung eines Lichtgitters**
Method for controlling a light barrier
Procédé de commande d'une barrière optique

(30) Priorität: 03.08.2001 DE 10138223
(43) Veröffentlichungstag der Anmeldung: 05.02.2003
(73) Patentinhaber: SICK AG, 79183 Waldkirch, Breisgau (DE)
(72) Erfinder: Braune, Ingolf, 79194 Gundelfingen (DE); Bergbach, Roland, 79312 Emmendingen (DE)
(74) Vertreter: Manitz, Finsterwald & Partner GbR

(56) Entgegenhaltungen:
- WO-A-00/67932
- DE-A- 4 424 537
- US-A- 5 579 884
- US-B1- 6 243 006
- US-B1- 6 316 763

## Beschreibung

Die Erfindung betrifft ein Verfahren zur Steuerung eines Lichtgitters, das zur Absicherung eines durch eine Werkzeugbewegung vorgegebenen Gefahrenbereichs einen Überwachungsbereich aufweist, der mit der Werkzeugbewegung aktiviert wird. Ein derartiges Verfahren dient dazu, einen Werker, der das Werkzeug bzw. eine das Werkzeug aufweisende Arbeitsmaschine bedient, vor Verletzungen zu schützen.

Üblicherweise wird ein zu bearbeitendes Werkstück in den Bereich des Werkzeuges gebracht, und anschließend wird die für das betreffende Arbeitsverfahren erforderliche Werkzeugbewegung ausgelöst. Damit der Werker, und insbesondere seine Hände, nicht durch die Werkzeugbewegung verletzt wird, ist der durch die Anordnung und Bewegungsrichtung des Werkzeuges vorgegebene Gefahrenbereich mittels eines Lichtgitters gesichert. Das Lichtgitter bildet beispielsweise durch mehrere parallel und benachbart zueinander verlaufende Lichtschranken einen üblicherweise flächigen Überwachungsbereich, der an den Gefahrenbereich angrenzt oder benachbart zu diesem angeordnet ist. Vor oder mit der Werkzeugbewegung wird der Überwachungsbereich aktiviert. Es wird also überwacht, ob ein Eingriff in den Überwachungsbereich erfolgt und demzufolge wenigstens einer der ausgesandten Lichtstrahlen unterbrochen wird. Falls dies der Fall ist, wird üblicherweise ein Abschaltsignal erzeugt, das letztlich zu einem Abbruch der Werkzeugbewegung führt, um eine mögliche Verletzung des Werkers zu verhindern.

Der aus Sicherheitsgründen erwünschte Abstand des Werkers vom Gefahrenbereich bedingt jedoch auch, daß der Werker keine Justierungseingriffe durchführen kann, beispielsweise um ein zu bearbeitendes Werkstück zu halten oder zu führen. Dies kann zu einer vergleichsweise geringen Wirtschaftlichkeit des Arbeitsprozesses führen oder - falls der Werker in den bereits aktivierten Überwachungsbereich eingreift - zu häufigen Ablaufstörungen.

-Aus der US 5,579,884 ist eine Sicherungseinrichtung für eine Gesenkbiegepresse bekannt, bei der wenigstens ein Lichtstrahl vor und parallel zu der Vorderkante eines bewegten Werkzeugs verläuft und mit diesem mitgeführt wird.

Die US 6,316,763 B1 betrifft eine Sicherungseinrichtung einer Gesenkbiegepresse mit mehreren Laserlichtsendern und -empfängern, die in fester Anordnung relativ zu der Vorderkante eines Werkzeugs vorgesehen sind.

Aus der US 6,243,006 B1 ist eine Sicherungseinrichtung mit mehreren Lichtstrahlen bekannt, wobei stets der gesamte Gefahrenbereich gesichert ist und bei Verkleinerung des Gefahrenbereichs Lichtgittenelemente nacheinander de aktiviert, bei Vergrößerung aktiviert werden.

Es ist eine Aufgabe der Erfindung, die Sicherung eines Gefahrenbereichs mittels eines Lichtgitters auf eine Weise zu ermöglichen, bei der Eingriffe in den Gefahrenbereich möglich sind, ohne die Sicherheit des Werkers zu gefährden.

Diese Aufgabe wird durch ein Verfahren mit den Merkmalen des Anspruchs 1 gelöst.

Dem erfindungsgemäßen Verfahren liegt eine Anpassung an den typischen Bewegungsablauf des Werkzeuges zugrunde. Bei vielen Anwendungen erfolgt nämlich zuerst eine schnelle Schließbewegung eines ersten Werkzeugteils in Richtung eines zugeordneten zweiten Werkzeugteils, und erst danach erfolgt eine langsamere Bearbeitungsbewegung, mit der die eigentliche Bearbeitung des Werkstücks durchgeführt wird. Der Erfindung liegt dabei die Erkenntnis zugrunde, daß ein Eingriff in den Gefahrenbereich während der schnellen Schließbewegung noch möglich sein soll, solange eine ausreichend große Öffnung zwischen den beiden Werkzeugtei- len vorhanden ist, um eine Verletzung des Werkers noch verhindern zu können. Bei der Erfindung wird der Gefahrenbereich also erst dann vollständig oder mittels weiterer Maßnahmen zusätzlich gesichert, wenn die Öffnung zwischen den beiden Werkzeugteilen sich auf eine Größe verringert hat, die zu einer tatsächlichen Gefahr für den Werker werden kann, wobei ein nachstehend noch erläuterter Nachlaufweg des Werkzeuges berücksichtigt werden kann.

Während der schnellen Schließbewegung des Werkzeuges besteht eine teilweise Sicherung des Gefahrenbereichs somit dahingehend, daß ein Eingriff in einen ungesicherten Teil des Gefahrenbereiches noch nicht zur Erzeugung eines Abschaltsignals führt. Andererseits kann jedoch die teilweise Sicherung des Gefahrenbereichs durch das bewegte aktive Feld den Werker vor einer Verletzung innerhalb besonders gefährlicher Teile des Gefahrenbereichs schützen, beispielsweise vor einer Verletzung durch Biegekanten oder Schneidkanten an einem der Werkzeugteile.

Gegenüber geschlossenen Ausblendfeldern, durch die eine vorhersagbare und somit programmierbare Bewegung eines Werkstückes in den Gefahrenbereich ermöglicht werden soll, liegt der Erfindung ein genau umgekehrter Lösungsansatz zugrunde: bei dem erfindungsgemäßen Verfahren wird nämlich ein geschlossener Teilbereich des Überwachungsbereichs, der dem Raumbereich der aktuell für den Werker tatsächlich bestehenden Gefahr entspricht, gesichert.

Somit bietet die Erfindung den Vorteil, daß das zu bearbeitende Werkstück noch während eines Teils oder während der gesamten schnellen Schließbewegung des Werkzeuges gehalten und/oder justiert werden kann, was letztlich - ohne Gefährdung des Werkers - zu einer Erhöhung der Wirtschaftlichkeit des Arbeitsprozesses führt.

Zu diesem Zweck wird der Überwachungsbereich des Lichtgitters spätestens mit Beginn der Werkzeugbewegung, oder kurz danach, aktiviert, und zwar als aktives Feld mit einer geschlossen begrenzten, im wesentlichen lückenlosen Fläche. Ein derartiger geschlossener Teilbereich des Überwachungsbereichs kann beispielsweise durch eine oder mehrere parallel zueinander verlaufende, aneinandergrenzende Lichtschranken gebildet sein.

Dieses aktive Feld wird in einer Weise bewegt, die der Werkzeugbewegung entspricht, wie nachfolgend noch erläutert wird. Für eine derartige Bewegung des aktiven Feldes wird der jeweils restliche Teilbereich des Überwachungsbereichs deaktiviert, das heißt dort erfolgt keine Überwachung und kann demzufolge kein Abschaltsignal erzeugt werden. Das aktive Feld kann rein translatorisch bewegt werden, indem es bei im wesentlichen gleichbleibender Fläche innerhalb des Überwachungsbereichs verschoben wird. Unter der Bewegung des aktiven Feldes ist jedoch auch eine Vergrößerung oder eine Verringerung der aktiven Fläche zu verstehen, bei der wenigstens eine Begrenzung des aktiven Feldes unverändert bleibt. Mit anderen Worten wird das aktive Feld für eine Bewegung hinsichtlich seiner Lage und/oder hinsichtlich seiner Ausdehnung verändert.

Ferner ist anzumerken, daß unter dem im Zusammenhang mit der Erfindung genannten Gefahrenbereich derjenige Raumbereich zu verstehen ist, innerhalb dessen aufgrund der Bewegung des Werkzeuges potentiell, das heißt zumindest ab einem bestimmten Stadium der Werkzeugbewegung eine Verletzungsgefahr für den Werker besteht. Der Gefahrenbereich ist somit regelmäßig durch den Umriß einer Eingriffsöffnung des Werkzeuges bzw. der betreffenden Arbeitsmaschine einerseits und die mögliche Richtung und Tiefe der Werkzeugbewegung andererseits vorgegeben.

Bei vielen Anwendungen der Erfindung bewegt sich der Gefahrenbereich mit der Bewegung des Werkzeuges, da die Gefahr für den Werker letztlich vom Werkzeug ausgeht. Bei einer derartigen Bewegung des Gefahrenbereichs kann dieser seine Lage und/oder seine Ausdehnung verändern. Falls beispielsweise ein Oberwerkzeug sich auf ein in fester Position angeordnetes Unterwerkzeug zu bewegt, bewegt sich die Obergrenze des Gefahrenbereichs entsprechend nach unten, während die Untergrenze des Gefahrenbereichs unverändert bleibt.

Bei einer bevorzugten Ausführungsform des erfindungsgemäßen Verfahrens folgt die Bewegung des aktiven Feldes während der teilweisen Sicherung des Gefahrenbereichs der Werkzeugbewegung oder einer Bewegung des Gefahrenbereichs. Dies entspricht der Funktion der Sicherung von besonders gefährlichen Teilen des Gefahrenbereichs durch das aktive Feld.

Bei der Erfindung wird der Gefahrenbereich im Anschluß an die erläuterte teilweise Sicherung während einer weiteren Werkzeugbewegung durch das aktive Feld vollständig gesichert. Mit anderen Worten führt ab diesem Zeitpunkt jeglicher Eingriff in den Gefahrenbereich bzw. den verbleibenden Teil des Gefahrenbereichs zu einem Abschaltsignal.

Alternativ hierzu ist es möglich, daß das aktive Feld des Überwachungsbereichs, nachdem es den Gefahrenbereich teilweise gesichert hat und zu diesem Zweck mit der Bewegung des Werkzeuges oder des Gefahrenbereichs bewegt worden ist, den Gefahrenbereich weiterhin ohne weitere Bewegung teilweise sichert. Es ist auch möglich, daß zu dem genannten Zeitpunkt der Überwachungsbereich vollständig deaktiviert wird, also daß die Sicherung des Gefahrenbereichs nicht mehr durch das Lichtgitter erfolgt. In diesen beiden Fällen kann statt dessen ein weiterer optoelektronischer Sensor, beispielsweise ein Reflexionslichttaster oder eine Lichtschranke, vorgesehen sein, durch den der zu diesem Zeitpunkt verbleibende Teil des Gefahrenbereichs gesichert wird.

Eine derartige Vorgehensweise kommt insbesondere dann in Betracht, wenn ein Werkstück während der gesamten Werkzeugbewegung und insbesondere während der eigentlichen Bearbeitungsbewegung des Werkzeuges aufgrund seiner Abmessungen den Überwachungsbereich durchdringen und dabei in den Gefahrenbereich hineinragen soll, ohne dadurch ein Ausschaltsignal hervorzurufen. Zu diesem Zweck wird das aktive Feld des Überwachungsbereichs bis an das Werkstück in eine Zwischenposition heran bewegt, und die Sicherung des Gefahrenbereichs wird ab diesem Zeitpunkt zusätzlich oder ausschließlich mittels des genannten optoelektronischen Sensors durchgeführt.

Bei einer weiteren vorteilhaften Weiterbildung des erfindungsgemäßen Verfahrens erfolgt die Bewegung des aktiven Feldes während der teilweisen Sicherung des Gefahrenbereichs derartig, daß das aktive Feld der Bewegung des Werkzeugs oder einer Bewegung des Gefahrenbereichs um einen Nachlaufweg - oder noch weiter - vorauseilt. Unter diesem Nachlaufweg ist der Bremsweg des sich bewegenden Werkzeuges bzw. desjenigen Werkzeugteils zu verstehen, von dem die Gefahr für den Werker ausgeht und das die momentane Begrenzung des Gefahrenbereichs vorgibt. Dieser Nachlaufweg kann vor dem eigentlichen Arbeitsprozeß beispielsweise mittels eines separaten Sensors bestimmt werden, um im Rahmen des erfindungsgemäßen Verfahrens der Mindestausdehnung bzw. dem Bewegungsverlauf des aktiven Feldes zugrundegelegt zu werden.

Vorzugsweise wird bei dem erfindungsgemäßen Verfahren lediglich ein einziger geschlossener Teilbereich des Überwachungsbereichs als aktives Feld aktiviert. Es ist jedoch auch möglich, mehrere, insbesondere zwei geschlossene Teilbereiche des Überwachungsbereichs als aktive Felder vorzusehen. Dies ist insbesondere von Vorteil, wenn - beispielsweise bei einem Roboter - zwei Werkzeugteile vorgesehen sind, die nicht nur relativ zueinander bewegt werden, sondern beide bezüglich des zu bearbeitenden Werkstücks bewegt werden und dabei separate Gefahrenbereiche bilden.

Das erfindungsgemäße Verfahren findet besonders vorteilhafte Verwendung zur Sicherung eines Gefahrenbereiches einer Gesenkbiegepresse oder eines Stanzwerkzeuges. In diesem Fall kann der Werker nämlich - während der teilweisen Sicherung des Gefahrenbereichs - noch unmittelbar an der Biegelinie arbeiten, beispielsweise um das Werkstück zu halten oder zu justieren.

Weitere Ausführungsformen der Erfindung sind in den Unteransprüchen genannt.

Die Erfindung wird nachfolgend beispielhaft unter Bezugnahme auf die Figuren erläutert; in diesen zeigen:
- Fig. 1a und 1b: Vorderansichten von Teilen einer Gesenkbiegepresse,
- Fig. 2a bis 2e: Seitenansichten der Gesenkbiegepresse während des Ablaufs des erfindungsgemäßen Verfahrens,
- Fig. 3: eine Vorderansicht einer Gesenkbiegepresse mit zusätzlicher Sicherung des Gefahrenbereichs,
- Fig. 4: eine Seitenansicht dieser Gesenkbiegepresse.

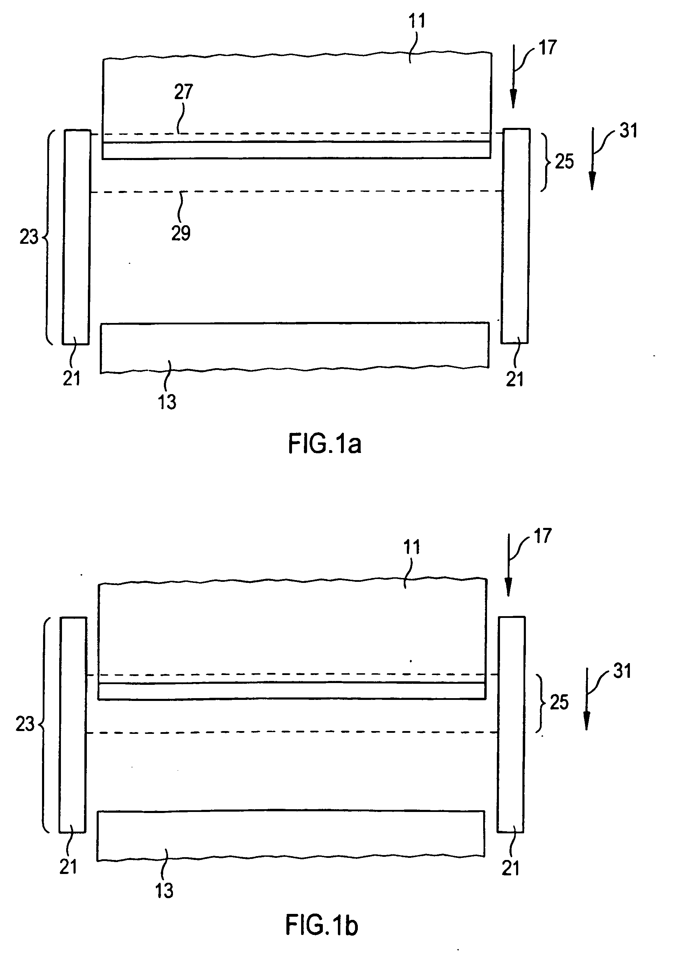

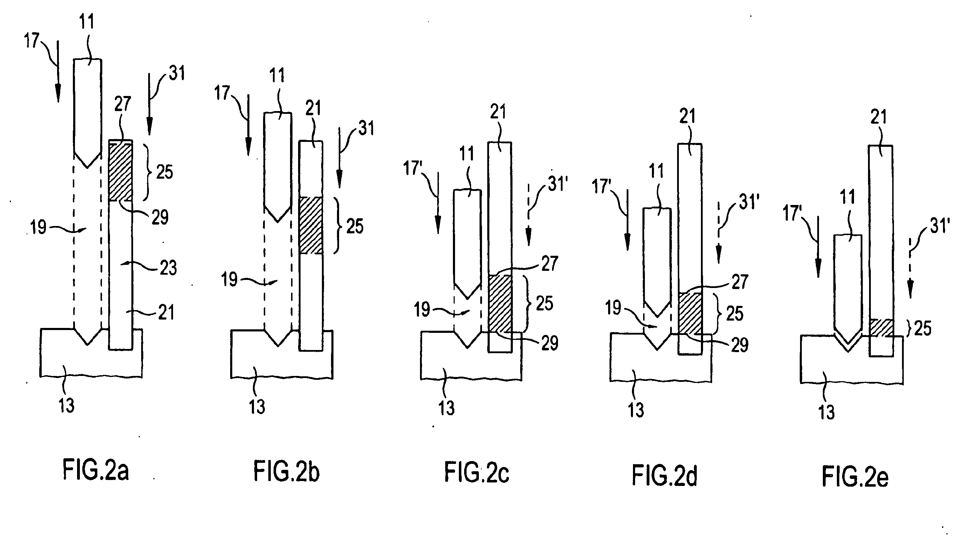

Fig. 1a und 1b sowie 2a bis 2e zeigen verschiedene Stadien des erfindungsgemäßen Verfahrens, das an einer Gesenkbiegepresse durchgeführt wird, wobei die Fig. 1a und 2a sowie die Fig. 1b und 2b jeweils einander entsprechen.

Die Gesenkbiegepresse besitzt zwei Werkzeugteile, nämlich ein Oberwerkzeug 11 und ein Unterwerkzeug 13. Das Unterwerkzeug 13 befindet sich auf einem Maschinentisch (nicht dargestellt). Zur Ablage eines Werkstücks dienen Auflage- und Biegehilfen (nicht dargestellt). Das Oberwerkzeug 11 ist zu einer vertikal nach unten gerichteten Schließbewegung 17 antreibbar, um letztlich ein Werkstück, beispielsweise ein Blech, zu biegen, das zwischen das Oberwerkzeug 11 und das als Gegenwerkzeug fungierende Unterwerkzeug 13 eingeführt worden ist.

Der räumliche Bereich, der sich ausgehend von dem Oberwerkzeug 11 in Richtung 17 des Unterwerkzeugs 13 erstreckt, bildet einen Gefahrenbereich 19 für eine Bedienperson (Werker), die das Werkstück zwischen Oberwerkzeug 11 und Unterwerkzeug 13 einführt und dort in einer bestimmten Lage justiert und hält (vgl. Fig. 2a).

An den beiden Seiten der Gesenkbiegepresse, und zwar unmittelbar vor dem Gefahrenbereich 19 sind zwei Sensorpfosten 21 angeordnet. Diese weisen im einzelnen nicht gezeigte Lichtsender und Lichtempfänger auf, um mehrere Lichtschranken zu bilden, die horizontal und aneinandergrenzend zwischen den beiden Sensorpfosten 21 verlaufen. Hierdurch wird ein Lichtgitter mit einem Überwachungsbereich 23 gebildet, der sich zwischen den beiden Sensorpfosten 21 einerseits und entlang der gesamten Höhe der Sensorpfosten 21 andererseits in Form einer rechteckigen Fläche erstreckt.

Der Überwachungsbereich 23 des Lichtgitters dient zur Sicherung des Gefahrenbereichs 19 gegen einen unzulässigen Eingriff des Werkers, um Verletzungen beispielsweise der Finger des Werkers durch das Oberwerkzeug 11 und das Unterwerkzeug 13 während des Schließvorgangs zu verhindern. Zu diesem Zweck ist eine nicht dargestellte Steuerschaltung vorgesehen, mittels derer der Überwachungsbereich 23 vollständig oder teilweise aktivierbar ist. Dies bedeutet, daß für den betreffenden Teil des Überwachungsbereichs 23 Sendelicht ausgesandt und auf Empfang überwacht wird, um bei Detektion einer Unterbrechung der betreffenden Lichtschranke ein Abschaltsignal zu erzeugen, das zur Unterbrechung der Schließbewegung 17 des Oberwerkzeugs 11 führt.

Wie bereits erwähnt, ist es möglich, daß lediglich ein Teil des Überwachungsbereich 23 aktiviert wird. Soweit es sich bei diesem aktivierten Teil des Überwachungsbereich 23 um eine geschlossene Fläche handelt, wird er im folgenden als aktives Feld 25 bezeichnet. Aufgrund der - für die praktische Verwirklichung besonders einfachen - Anordnung der beiden Sensorpfosten 21 in seitlicher Gegenüberstellung erstreckt sich das aktive Feld 25 stets in Form eines rechteckigen Streifens von dem einen Sensorpfosten 21 zu dem anderen Sensorpfosten 21, mit einer horizontalen oberen Begrenzung 27 und einer horizontalen unteren Begrenzung 29.

Im folgenden wird ein möglicher Ablauf des erfindungsgemäßen Verfahrens beschrieben:
Zu Beginn der Absenkbewegung 17 des Oberwerkzeugs 11, die während einer Schließbewegung (Fig. 1a, 2a; 1b, 2b; 2c) mit erhöhter Geschwindigkeit erfolgt, wird lediglich ein oberer Teil des Überwachungsbereichs 23 als aktives Feld 25 aktiviert. Wie aus Fig. 1a ersichtlich, überdeckt das aktive Feld 25 den unteren Teil des Oberwerkzeugs 11 einschließlich einer daran angeordneten Biege- oder Schneidkante, und es erstreckt sich über diese Kante hinaus noch weiter nach unten. Allerdings ist zwischen dem aktiven Feld 25 und dem Unterwerkzeug 13 noch ausreichend Platz, um ein Werkstück in den Gefahrenbereich 19 einführen bzw. dort ausrichten zu können (vgl. Fig. 2a).
Mit Beginn der Bewegung 17 des Oberwerkzeugs 11 nach unten wird - durch entsprechende Steuerung der in den Sensorpfosten 21 enthaltenen Lichtsender und -empfänger - auch das aktive Feld 25 nach unten bewegt, wie durch den durchgezogenen Pfeil 31 in Fig. 1a und 2a gezeigt. Diese Bewegung 31 des aktiven Feldes 25 erfolgt nicht nur in gleicher Richtung, sondern auch mit derselben Geschwindigkeit wie die Abwärtsbewegung 17 des Oberwerkzeugs 11, so daß das aktive Feld 25 zunächst seine Lage relativ zu dem Oberwerkzeug 11 beibehält.

Dies ist beispielsweise aus Fig. 1b und 2b ersichtlich. Auch hier wird also durch das aktive Feld 25 derjenige Teil des Gefahrenbereichs 19 gesichert, der dem unteren Teil des Oberwerkzeugs 11 sowie dem unmittelbar darunter befindlichen Raumbereich entspricht. Auch während dieses Stadiums der schnellen Schließbewegung 17 des Oberwerkzeugs 11 ist der Gefahrenbereich 19 somit lediglich teilweise gesichert, so daß unterhalb des aktiven Felds 25 noch ein Eingriff in den Gefahrenbereich 19 möglich ist, beispielsweise um Justierungsmaßnahmen zu treffen.

Aufgrund dieser Bewegung 31 des aktiven Feldes 25 parallel zu der schnellen Schließbewegung 17 des Oberwerkzeugs 11 wird schließlich der in Fig. 2c gezeigte Zustand erreicht: Das aktive Feld 25 grenzt nun mit seiner unteren Begrenzung 29 unmittelbar an das auf dem Unterwerkzeug 13 aufliegende Werkstück bzw. - bei nicht vorhandenem Werkstück (wie gezeigt) - an das Unterwerkzeug 13 an, so daß ein Eingriff in den verbleibenden Gefahrenbereich 19 nicht mehr möglich ist, ohne ein Abschaltsignal auszulösen (vollständige Sicherung des Gefahrenbereichs 19). Ab diesem Zeitpunkt (sogenannter Umschaltpunkt) wird bei dem gezeigten Ausführungsbeispiel wie folgt weiter verfahren:
Das Oberwerkzeug 11 wird nun mit einer gegenüber der vorherigen Schließbewegung verringerten Geschwindigkeit zu einer weiterhin nach unten gerichteten Bearbeitungsbewegung 17' angetrieben. Außerdem wird nun die untere Begrenzung 29 des aktiven Feldes 25 in fester Position beibehalten; das aktive Feld 25 grenzt also mit seiner Unterseite 29 - aufgrund entsprechender Steuerung der verwendeten Lichtschranken - weiterhin genau an die Oberfläche des Werkstücks bzw. - falls kein Werkstück vorhanden ist - an das Unterwerkstück 13 an.

Allerdings wird das aktive Feld 25 insofern weiterhin bewegt, als seine obere Begrenzung 27 zunächst noch der Bewegung 17' des Oberwerkzeugs 11 folgt. Diese Bewegung des aktiven Feldes 25 ist durch den gestrichelten Pfeil 31' angedeutet. Das aktive Feld 25 ändert somit ab diesem Zeitpunkt letztlich seine Größe.

Wie aus den Fig. 2d und 2e ersichtlich, werden die Bearbeitungsbewegung 17' des Oberwerkzeugs 11 und die parallele Abwärtsbewegung 31' der oberen Begrenzung 27 des aktiven Feldes 25 fortgesetzt. Dadurch wird letztlich die erwünschte Press- bzw. Biegebearbeitung des - nicht dargestellten - Werkstücks erzielt, während gleichzeitig der jeweils verbleibende Gefahrenbereichs 19 vollständig gesichert bleibt.

Zu dem Ausführungsbeispiel gemäß Fig. 1a und 1b ist noch anzumerken, daß die Erstreckung und die Anordnung des aktiven Feldes 25 relativ zu der Unterseite des Oberwerkzeugs 11 die Ansprechzeit des Lichtgitters und den Nachlaufweg des Oberwerkzeugs 11 berücksichtigt: Dadurch, daß das aktive Feld 25 in Bewegungsrichtung 17 des Oberwerkzeugs 11 deutlich über dessen Unterseite übersteht (vgl. Fig. 2a und 2b), wird gewährleistet, daß nach einem Eingriff in das aktive Feld 25 und einem hierdurch verursachten Abschaltsignal die für die Erzeugung des Abschaltsignals erforderliche Zeitdauer und der trägheitsbedingte Nachlauf des mit vergleichsweise hoher Geschwindigkeit angetriebenen Oberwerkzeugs 11 keine zusätzliche Gefahr für den Werker bilden.

Das erläuterte Ausführungsbeispiel kann im Rahmen der Erfindung insbesondere auch dahingehend abgeändert werden, daß das aktive Feld 25 zwar der Schließbewegung 17 des Oberwerkzeugs 11 folgt, dabei jedoch kontinuierlich seine vertikale Erstreckung verändert, insbesondere zunächst vergrößert.

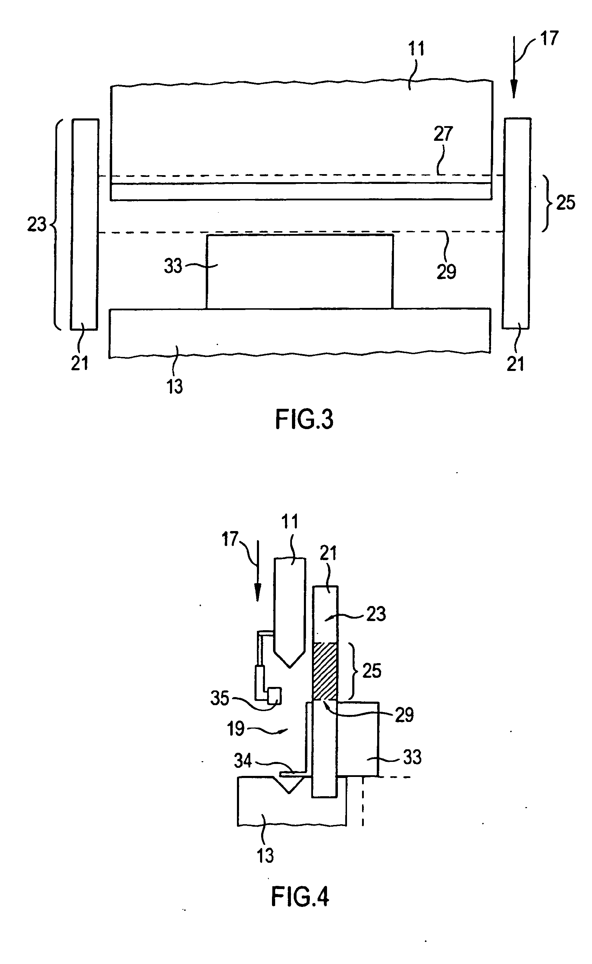

Fig. 3 und 4 zeigen ein weiteres Ausführungsbeispiel,
wobei gleichartige Teile mit denselben Bezugszeichen versehen sind wie in Fig. 1 und 2.

Dieses Ausführungsbeispiel betrifft den Anwendungsfall, daß ein kastenförmiges Werkstück 33, und zwar ein in den Gefahrenbereich 19 hineinragender Deckelabschnitt 34, durch die Gesenkbiegepresse bearbeitet werden soll. Dabei stellt sich das Problem, daß das Werkstück 33 in den Überwachungsbereich 23 hineinragen können soll, ohne hierdurch ein Abschaltsignal auszulösen. Mittels der einfach zu verwirklichenden Anordnung der zwei seitlichen Sensorpfosten 21 mit horizontal verlaufenden Lichtschranken soll dennoch ein ausreichender Schutz des Werkers gewährleistet werden.

Zu diesem Zweck wird zunächst lediglich ein aktives Feld 25 aktiviert und gemeinsam mit dem Oberwerkzeug 11 nach unten bewegt, wie bereits im Zusammenhang mit den Fig. 1a und 2a sowie 1b und 2b beschrieben. Diese Bewegungen 17, 31 werden durchgeführt, bis das aktive Feld 25 mit seiner unteren Begrenzung 29 an die Oberseite des Werkstücks 33 angrenzt. Dadurch ist der in den Fig. 3 und 4 gezeigte Zustand erreicht.

Für die weitere Sicherung des Gefahrenbereichs 19 ist nun ein optoelektronischer Sensor 35, beispielsweise ein Reflexionslichttaster oder eine Lichtschranke vorgesehen (in Fig. 4 nicht maßstabsgerecht dargestellt). Dieser Sensor 35 überwacht den Teil des Gefahrenbereichs 19, der an die Unterseite des Oberwerkzeugs 11 angrenzt. Diese Überwachung erfolgt von der Rückseite des Gefahrenbereichs aus, also von der dem Überwachungsbereich 23 bzw. dem Sensorpfosten 21 gegenüber liegenden Seite aus. Durch den Sensor 35 wird somit eine Sicherung derartiger Teile des Gefahrenbereichs 19 ermöglicht, die - bedingt durch den zwangsläufigen Eingriff des Werkstücks 33 in den Überwachungsbereich 23 - nicht durch das aktive Feld 25 des von den Sensorpfosten 21 aufgespannten Lichtgitters gesichert werden können, wie dies bei dem Ausführungsbeispiel gemäß Fig. 1 und 2 der Fall ist.

Der Sensor 35 folgt der Bewegung 17 des Oberwerkzeugs 11 zumindest teilweise. Zu diesem Zweck ist er mit dem Oberwerkzeug 11 verbunden. Eine derartige Verbindung kann starr sein, falls hierdurch - beispielsweise aufgrund einer bezüglich der Ansicht gemäß Fig. 3 seitlichen Montage des Sensors 35 - die Bewegung des Oberwerkzeugs 11 nicht behindert wird. Alternativ kann eine verschiebbare Verbindung, beispielsweise in der Art einer Teleskopverbindung, vorgesehen sein, um nach Auftreffen des Sensors 35 auf dem Unterwerkzeug 13 eine weitere Abwärtsbewegung 17 des Oberwerkzeugs 11 zu ermöglichen.

Der Sensor 35 kann alternativ auch - fest oder justierbar - mit dem Unterwerkzeug 13 verbunden sein. In diesem Fall ist eine Aktivierung des Sensors 35 in Abhängigkeit von der Schließ- bzw. Bearbeitungsbewegung möglich.

Ausgehend von der in Fig. 3 und 4 gezeigten Zwischenposition des aktiven Feldes 25 bestehen verschiedene Möglichkeiten der weiteren Steuerung des aktiven Feldes 25: Entweder bleibt das aktive Feld 25, ohne weitere Bewegung, während der weiteren Bewegung 17 des Oberwerkzeugs 11 in der Position wie in Fig. 3 und 4 gezeigt. Oder das aktive Feld 25 und somit der gesamte Überwachungsbereich 23 werden, spätestens nachdem die Unterseite des Oberwerkzeugs 11 die Oberseite des Werkstücks 33 passiert hat, vollständig deaktiviert. Es ist auch möglich, daß die obere Begrenzung 27 des aktiven Feldes 25 der Abwärtsbewegung 17 des Oberwerkzeugs 11 folgt, ähnlich wie bereits im Zusammenhang mit den Fig. 2c, 2d und 2e beschrieben.

### Bezugszeichenliste

- 11: Oberwerkzeug
- 13: Unterwerkzeug
- 17: Schließbewegung des Oberwerkzeuges
- 17': Bearbeitungsbewegung des Oberwerkzeuges
- 19: Gefahrenbereich
- 21: Sensorpfosten
- 23: Überwachungsbereich
- 25: aktives Feld
- 27: obere Begrenzung des aktiven Feldes
- 29: untere Begrenzung des aktiven Feldes
- 31: Bewegung des aktiven Feldes
- 31': Bewegung des aktiven Feldes
- 33: Werkstück
- 34: Deckelabschnitt
- 35: optoelektronischer Sensor

## Patentansprüche

1. Verfahren zur Steuerung eines Lichtgitters, das zur Sicherung eines durch eine Werkzeugbewegung (17, 17') vorgegebenen Gefahrenbereichs (19) einen Überwachungsbereich (23) aufweist,
wobei ein Lichtgitter mit einem Überwachungsbereich (23) dadurch gebildet wird, daß zwei mit Lichtsendern und Lichtempfängern versehene Sensorpfosten (21) mehrere Lichtschranken bilden,
wobei durch entsprechende Steuerung der in den Sensorpfosten (21) enthaltenen Lichtsender und Lichtempfänger ein geschlossener Teilbereich des Überwachungsbereichs (23) als ein aktives Feld (25) aktiviert wird und dieses aktive Feld (25) innerhalb des Überwachungsbereichs (23) bewegt wird,
**dadurch gekennzeichnet,**
**daß** das aktive Feld (25) innerhalb des Überwachungsbereichs (23) und entlang der Sensorpfosten (21) derartig bewegt wird, daß der Gefahrenbereich (19) während einer ersten Werkzeugbewegung (17) lediglich teilweise und danach während einer weiteren Werkzeugbewegung (17') vollständig gesichert wird.

2. Verfahren nach Anspruch 1,
**dadurch gekennzeichnet,**
**daß** für die teilweise Sicherung des Gefahrenbereichs (19) die Bewegung (31, 31') des aktiven Feldes (25) der Werkzeugbewegung (17, 17') und/oder einer Bewegung des Gefahrenbereichs (19) folgt.

3. Verfahren nach einem der vorhergehenden Ansprüche,
**dadurch gekennzeichnet,**
**daß** der Gefahrenbereich (19) sich mit der Bewegung (17, 17') des Werkzeuges (11) bewegt.

4. Verfahren nach einem der vorhergehenden Ansprüche,
**dadurch gekennzeichnet,**
**daß** während der teilweisen Sicherung des Gefahrenbereichs (19) ein Eingriff in einen ungesicherten Teil des Gefahrenbereichs (19) noch nicht zur Erzeugung eines Abschaltsignals führt.

5. Verfahren nach einem der vorhergehenden Ansprüche,
**dadurch gekennzeichnet,**
**daß** während der vollständigen Sicherung des Gefahrenbereichs (19) die Bewegung (31') des aktiven Feldes (25) der Werkzeugbewegung (17') und/oder einer Bewegung des Gefahrenbereichs (19) folgt,
wobei insbesondere die Ausdehnung (27) des aktiven Felds (25) entsprechend der Werkzeugbewegung (17') und/oder der Bewegung des Gefahrenbereichs (19) verringert wird.

6. Verfahren nach einem der vorhergehenden Ansprüche,
**dadurch gekennzeichnet,**
**daß** während der teilweisen Sicherung des Gefahrenbereichs (19) die Bewegung (31) des aktiven Feldes (25) der Werkzeugbewegung (17) und/oder einer Bewegung des Gefahrenbereichs (19) zumindest um einen Nachlaufweg vorauseilt.

7. Verfahren nach einem der vorhergehenden Ansprüche,
**dadurch gekennzeichnet,**
**daß** der Überwachungsbereich (23) des Lichtgitters eine obere Begrenzung, eine untere Begrenzung und zwei seitliche Begrenzungen, und insbesondere die Form einer rechteckigen Fläche besitzt, wobei
- das aktive Feld (25) einen rechteckigen geschlossenen Teilbereich des Überwachungsbereichs (23) einnimmt, und/ oder
- das aktive Feld (25) sich von der einen seitlichen Begrenzung zu der anderen seitlichen Begrenzung oder von der oberen zu der unteren Begrenzung erstreckt, und/oder
- das aktive Feld (25) sich ausgehend von einer, insbesondere der oberen Begrenzung zu der gegenüber liegenden, insbesondere der unteren Begrenzung bewegt.

8. Verfahren nach einem der vorhergehenden Ansprüche,
**dadurch gekennzeichnet,**
**daß** für eine Bewegung (31, 31') des aktiven Feldes (25) eine (27) oder mehrere (27, 29), insbesondere zwei gegenüber liegende oder alle Begrenzungen des aktiven Feldes innerhalb des Überwachungsbereichs (23) des Lichtgitters verändert werden.

9. Verfahren nach einem der vorhergehenden Ansprüche,
**dadurch gekennzeichnet,**
**daß** während der teilweisen Sicherung des Gefahrenbereichs (19) das aktive Feld (25) unter Beibehaltung seiner Ausdehnung rein translatorisch bewegt (31) wird.

10. Verfahren nach einem der vorhergehenden Ansprüche,
**dadurch gekennzeichnet,**
**daß** für die teilweise Sicherung des Gefahrenbereichs (19) eine obere Begrenzung (27) des aktiven Feldes (25) einer Abwärtsbewegung (17, 17') einer oberen Begrenzung des Gefahrenbereichs (19) folgt,
wobei die obere Begrenzung des Gefahrenbereichs insbesondere durch die Unterseite eines Oberwerkzeuges (11) vorgegeben ist.

11. Verfahren nach einem der vorhergehenden Ansprüche,
**dadurch gekennzeichnet,**
**daß** während der teilweisen Sicherung des Gefahrenbereichs (19) ein zunehmender Anteil des Gefahrenbereichs gesichert wird und der ungesicherte Teil des Gefahrenbereichs sich kontinuierlich verringert.

12. Verfahren nach einem der vorhergehenden Ansprüche,
**dadurch gekennzeichnet,**
**daß** lediglich ein einziger geschlossener Teilbereich des Überwachungsbereichs (23) als ein aktives Feld (25) aktiviert wird, oder
**daß** mehrere, insbesondere zwei geschlossene Teilbereiche des Überwachungsbereichs als aktive Felder aktiviert werden.

13. Verfahren nach einem der vorhergehenden Ansprüche,
**dadurch gekennzeichnet,**
**daß** das Verfahren zur Sicherung eines Gefahrenbereichs (19) einer Gesenkbiegepresse und/oder eines Stanzwerkzeuges verwendet wird.

## Claims

1. A method of controlling a light grid which comprises a monitored zone (23) for securing a hazardous zone (19) pre-determined by a tool movement (17, 17'),
wherein a light grid with a monitored zone (23) is formed in that two sensor posts (21) provided with light transmitters and light receivers form a plurality of light barriers;
wherein a closed region of the monitored zone (23) is activated as an active field (25) by a corresponding control of the light transmitters and light receivers contained in the sensor posts (21) and this active field (25) is moved within the monitored zone (23)
**characterized in that**
the active field (25) is moved within the monitored zone (23) and along the sensor posts (21) such that the hazardous zone (19) is only partly secured during a first tool movement (17) and is thereafter fully secured during a further tool movement (17').

2. A method in accordance with claim 1, **characterized in that** the movement (31, 31') of the active field (25) follows the tool movement (17, 17') and/or a movement of the hazardous zone (19) for the part securing of the hazardous zone (19).

3. A method in accordance with any one of the preceding claims, **characterized in that** the hazardous zone (19) moves with the movement (17, 17') of the tool (11).

4. A method in accordance with any one of the preceding claims, **characterized in that** an intervention into an unsecured part of the hazardous zone (19) during the part securing of the hazardous zone (19) still does not result in the production of a power down signal.

5. A method in accordance with any one of the preceding claims, **characterized in that**, during the full securing of the hazardous zone (19), the movement (31') of the active field (25) follows the tool movement (17') and/or a movement of the hazardous zone (19),
wherein in particular the extent (27) of the active field (25) is reduced according to the tool movement (17') and/or the movement of the hazardous zone (19).

6. A method in accordance with any one of the preceding claims, **characterized in that**, during the part securing of the hazardous zone (19), the movement (31) of the active field (25) leads the tool movement (17) and/or a movement of the hazardous zone (19) at least by a slowing down path.

7. A method in accordance with any one of the preceding claims, **characterized in that** the monitored zone (23) of the light grid has an upper boundary, a lower boundary and two side boundaries, and in particular has the form of a rectangular area, wherein
- the active field (25) takes up a rectangular, closed region of the monitored zone (23); and/or
- the active field (25) extends from the one side boundary to the other side boundary, or from the upper boundary to the lower boundary; and/or
- the active field (25), starting from a boundary, in particular the upper boundary, moves to the boundary, in particular the lower boundary, lying opposite.

8. A method in accordance with any one of the preceding claims, **characterized in that**, for a movement (31, 31') of the active field (25), one (27) or more (27, 29), in particular two opposite boundaries, or all boundaries, of the active field are modified within the monitored zone (23) of the light grid.

9. A method in accordance with any one of the preceding claims, **characterized in that**, during the part securing of the hazardous zone (19), the active field (25) is moved (31) in a purely translatory manner while maintaining its extent.

10. A method in accordance with any one of the preceding claims, **characterized in that**, for the part securing of the hazardous zone (19), an upper boundary (27) of the active field (25) follows a downward movement (17, 17') of an upper boundary of the hazardous zone (19), wherein the upper boundary of the hazardous zone is in particular pre-determined by the lower side of an upper tool (11).

11. A method in accordance with any one of the preceding claims, **characterized in that**, during the part securing of the hazardous zone (19), an increasing portion of the hazardous zone is secured and the unsecured part of the hazardous zone is continuously reduced.

12. A method in accordance with any one of the preceding claims, **characterized in that** only a single closed region of the monitored zone (23) is activated as an active field (25); or
**in that** a plurality of closed regions, in particular two, closed regions of the monitored zone are activated as active fields.

13. A method in accordance with any one of the preceding claims, **characterized in that** the method is used for the securing of a hazardous zone (19) of a bending press and/or of a stamping press.

## Revendications

1. Procédé pour la commande d'un grillage lumineux qui, pour assurer la protection d'une zone dangereuse (19) prédéterminée par le mouvement (17, 17') d'un outil, comprend une zone de surveillance (23),
dans lequel un grillage lumineux avec une zone de surveillance (23) est réalisé en ce que deux poteaux détecteurs (21) équipés d'émetteurs de lumière et de récepteurs de lumière forment plusieurs barrières lumineuses,
dans lequel, par une commande correspondante des émetteurs de lumière et des récepteurs de lumière contenue dans les poteaux détecteurs (21), une zone partielle fermée de la zone de surveillance (23) est activée en tant que champ actif (25), et ce champ actif (25) est déplacé à l'intérieur de la zone de surveillance (23),
**caractérisé en ce que**
le champ actif (25) est déplacé à l'intérieur de la zone de surveillance (23) et le long des poteaux détecteurs (21) de telle manière que la zone dangereuse (19) est protégée seulement partiellement pendant un premier mouvement (17) de l'outil et est ensuite protégée complètement pendant un autre mouvement (17') de l'outil.

2. Procédé selon la revendication 1,
**caractérisé en ce que**
pour la protection partielle de la zone dangereuse (19), le mouvement (31, 31') du champ actif (25) suit le mouvement (17, 17') de l'outil et/ou un mouvement de la zone dangereuse (19).

3. Procédé selon l'une des revendications précédentes,
**caractérisé en ce que**
la zone dangereuse (19) se déplace avec le mouvement (17, 17') de l'outil (11).

4. Procédé selon l'une des revendications précédentes,
**caractérisé en ce que**
pendant la protection partielle de la zone dangereuse (19), une intervention dans une zone non protégée de la zone dangereuse (19) ne mène pas encore à la génération d'un signal de coupure.

5. Procédé selon l'une des revendications précédentes,
**caractérisé en ce que**
pendant la protection complète de la zone dangereuse (19), le mouvement (31') du champ actif (25) suit le mouvement (17') de l'outil et/ou un mouvement de la zone dangereuse (19),
dans lequel particulièrement l'extension (27) du champ actif (25) est réduite en correspondance du mouvement (17') de l'outil et/ou du mouvement de la zone dangereuse (19).

6. Procédé selon l'une des revendications précédentes,
**caractérisé en ce que**
pendant la protection partielle de la zone dangereuse (19), le mouvement (31) du champ actif (25) précède, au moins de la valeur d'un trajet de poursuite, le mouvement (17) de l'outil et/ou un mouvement de la zone dangereuse (19).

7. Procédé selon l'une des revendications précédentes,
**caractérisé en ce que**
la zone de surveillance (23) du grillage lumineux possède une délimitation supérieure, une délimitation inférieure et deux délimitations latérales, et présente en particulier la forme d'un rectangle, de sorte que :
-- le champ actif (25) occupe une zone partielle fermée rectangulaire de la zone de surveillance (23), et/ou
-- le champ actif (25) s'étend depuis l'une des délimitations latérales jusqu'à l'autre délimitation latérale, ou depuis la délimitation supérieure jusqu'à la délimitation inférieure, et/ou
-- en partant d'une délimitation, en particulier la délimitation supérieure, le champ actif (25) se déplace jusqu'à la délimitation opposée, en particulier la délimitation inférieure.

8. Procédé selon l'une des revendications précédentes,
**caractérisé en ce que**
pour un mouvement (31, 31') du champ actif (25), une délimitation (27) ou plusieurs délimitations (27, 29), en particulier de délimitation opposée, ou encore toutes les délimitations du champ actif, sont modifiées à l'intérieur de la zone de surveillance (23) du grillage lumineux.

9. Procédé selon l'une des revendications précédentes,
**caractérisé en ce que**
pendant la protection partielle de la zone dangereuse (19), le champ actif (25) est déplacé purement en translation (31) en conservant son extension.

10. Procédé selon l'une des revendications précédentes,
**caractérisé en ce que**
pour la protection partielle de la zone dangereuse (19), une délimitation supérieure (27) du champ actif (25) suit un mouvement descendant (17, 17') d'une délimitation supérieure de la zone dangereuse (19), et
la délimitation supérieure de la zone dangereuse est prédéfinie en particulier par la face inférieure d'un outil supérieur (11).

11. Procédé selon l'une des revendications précédentes,
**caractérisé en ce que**
pendant la protection partielle de la zone dangereuse (19), une proportion croissante de la zone dangereuse est protégée et la partie non protégée de la zone dangereuse se réduit continuellement.

12. Procédé selon l'une des revendications précédentes,
**caractérisé en ce que**
seule une zone partielle fermée unique de la zone de surveillance (23) est activée à titre de champ actif (25), ou **en ce que** plusieurs zones partielles, en particulier deux zones partielles fermées, de la zone de surveillance sont activées à titre de champ actif.

13. procédé selon l'une des revendications précédentes,
**caractérisé en ce que**
le procédé est utilisé pour protéger une zone dangereuse (19) d'une presse-plieuse et/ou d'un outil de poinçonnage.
